# EUROPEAN PATENT SPECIFICATION

(11) **EP 0 909 475 B1**
(45) Date of publication and mention of the grant of the patent: **24.09.2003**
(21) Application number: 97930926.7
(22) Date of filing: 12.06.1997
(51) Int. Cl.: H02J 7/00

(54) **SAFETY DEVICE FOR A PORTABLE BATTERY-POWERED ELECTRIC APPARATUS**
SICHERHEITSVORRICHTUNG FÜR BATTERIEBETRIEBENES TRAGBARES GERÄT
DISPOSITIF DE SECURITE POUR UN APPAREIL ELECTRIQUE PORTABLE A BATTERIE

(30) Priority: 02.07.1996 SE 9602613
(43) Date of publication of application: 21.04.1999
(73) Proprietor: TELEFONAKTIEBOLAGET L M ERICSSON (publ), 126 25 Stockholm (SE)
(72) Inventor: MERCKE, Johan, S-226 53 Lund (SE); FRÄNNHAGEN, Björn, S-224 76 Lund (SE)
(74) Representative: Andersson, Björn E.
(86) International application number: SE9701025
(87) International publication number: WO98000899

(56) References cited:
- EP-A- 0 553 824
- WO-A-96/36098
- US-A- 4 563 628

## Description

### Technical Field

The present invention relates to a safety device for a portable battery-powered electric apparatus, the apparatus comprising a battery unit for supplying power to electric circuitry in the apparatus and being connectable to a charging device for charging the battery unit while maintaining the power supply of the apparatus.

### Description of the Prior Art

Rechargeable batteries are used in various portable applications, such as cellular telephones, communication radio devices, laptop computers, videocameras, etc. Throughout this document the discussion and description will relate to the first example above, i.e. cellular telephones. However, this does not limit the invention to cellular telephones only; on the contrary, a man skilled in the art will realize, when considering the description below, that the invention may be applied in various related technical fields.

In the applications above a rechargeable battery consists of a plurality (preferably 2-5) of battery cells, which are connected in series so as to provide an external supply voltage of between, for instance, 3 and 6 volts, as desired. Such a battery unit comprises additional components, such as connection terminals, contact tabs, battery housing and fuses. Conventionally, NiCd (nickelcadmium) battery cells have been frequently used, but recently NiMH (nickel-metal hydride) cells and Li cells (lithium-iron, lithium-polymer) have become more common. Regardless of the battery type, and for reasons of comfort, the battery may often be connected to a charging device for supplying charging current thereto, without having to remove the battery from e.g. the cellular telephone. Furthermore, due to user demands the battery may usually be charged without having to turn off the cellular telephone or remove it from service.

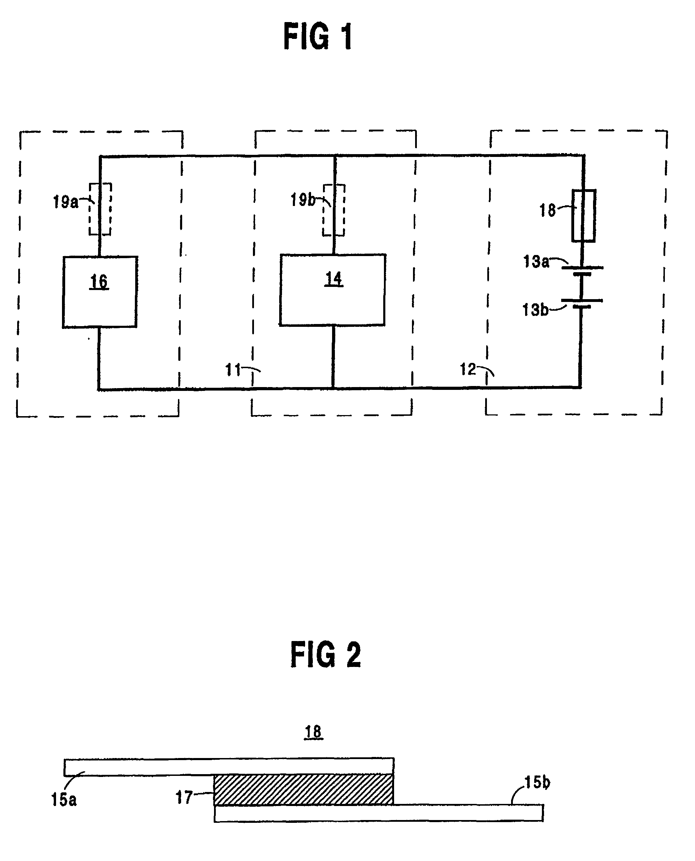

FIG 1 discloses a schematic block diagram for a charging arrangement according to the prior art. A number of battery cells 13a, 13b (in this case: two battery cells) are according to above connected in series and constitute a battery unit 12. The battery unit 12 is arranged to supply power to a cellular telephone 11, which may be chosen from any of the models available on the market and which is hence schematically indicated only by a dashed line. The cellular telephone comprises various electric and electronics circuits and components, such as power amplifiers, microprocessor, filter circuits, local oscillators, etc. The presence of these circuits and components is obvious to a man skilled in the art, and hence the components are only represented by electronic circuitry 14.

The battery unit 12 has two connections: a positive terminal and a negative terminal. To protect the battery the battery cells 13a, 13b are connected in series with a fuse 18, which will normally be resetable.

A charging device 16 is arranged to be attached via connections in the telephone 11 to the battery unit 12 for charging purposes. As appears from the drawing, the battery may be charged while the mobile telephone 11 is maintained in operation, which according to the above is a common user demand. A major disadvantage of a charging arrangement according to FIG 1 is that if the charging device for some reason would supply an excessively strong charging current to the battery unit 12, wherein the fuse 18 would open as a consequence thereof, then the voltage across the block of electronics 14 in the mobile telephone would rise to a dangerously high level, where the circuits and components in the block 14 may be damaged or completely destroyed. For this reason at least one additional fuse 19a and 19b, respectively, (or some other kind of suitable protection means) is required inside the charging device 16 and the mobile telephone 11, respectively. Such multiple-fuse safety arrangements require additional space and lead to an increase in manufacturing costs.

FIG 2 illustrates a fuse 18 according to the prior art. A thin layer of an active material 17 is interposed between two metallic contact tabs 15a, 15b. The active material 17 consists of a polymeric material and comprises thin carbon fibres, which normally conduct electric current between the contact tabs 15a, 15b. When the magnitude of the current increases due to an electric fault, the generation of heat in the active material 17 will increase as a consequence. The rising temperature in the material causes an expansion of the material, wherein the carbon fibres will separate and interrupt the electric connection between the contact tabs. The fuse is automatically resetable, since the carbon fibres will regain contact, once the material has cooled down.

Previously known battery units are shown in for instance GB-A-2 239 567, US-A-4 578 628, US-A-4 916 594 and US-A-4 555 451. Examples of useful fuses are found in US-A-4 563 628, US-A-5 367 280 and US-A-5 146 150, among others.

### Summary of the Invention

The object of the present invention is to provide effective and reliable charging of the battery unit in a portable electric apparatus, such as a cellular telephone, with a minimum of components and at a low cost of material. The invention is particularly aimed at eliminating the risk of damaging the electronics comprised in the apparatus due to an excessively high supply voltage, when the charging process deviates from the normal situation, for instance due to the release of a fuse in the battery unit.

The object is achieved by an apparatus and a battery unit according to the appended independent patent claims. The preferred embodiments of the apparatus and battery unit are defined in the subsequent dependent claims.

### Brief Description of the Drawings

The invention will now be described in more detail in the following, reference being made to the accompanying drawings, in which
FIG 1 is a schematic block diagram of a known charging arrangement for a mobile telephone,
FIG 2 discloses a known fuse, which is used in the arrangement according to FIG 1,
FIG 3 is a schematic block diagram of a charging arrangement for a mobile telephone, in which the safety device according to an embodiment of the invention is used,
FIG 4 illustrates one embodiment of the safety device according to the invention, as disclosed in FIG 3, and
FIG 5 illustrates an alternative embodiment of the safety device in FIG 3.

### Detailed Disclosure of the Invention

As previously mentioned, a known charging arrangement is shown in FIGs 1 and 2 as well as an example of a fuse used therein.

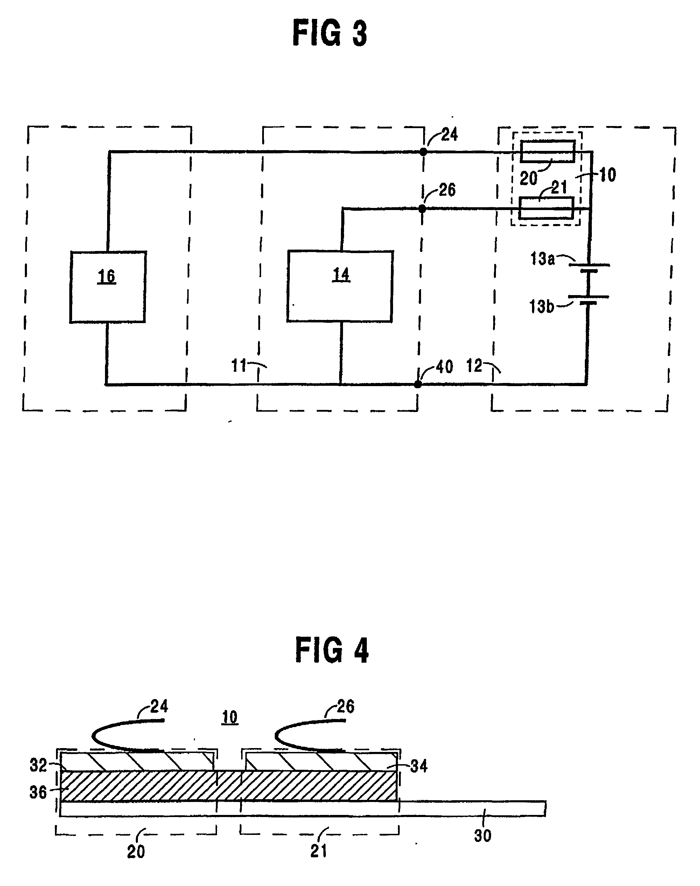

In FIG 3 a charging arrangement is shown, wherein a safety device 10 according to a preferred embodiment of the present invention is used. As in FIG 1, a charging device 16 is arranged to supply charging current to a battery unit 12 attached to a mobile telephone 11 for charging the battery unit. The charging device 16 and the mobile telephone 11 with its electronic circuitry 14 are essentially identical to the ones already described with reference to FIG 1, and hence the disclosure thereof is not repeated.

The battery unit 12 comprises a plurality - here: two - of battery cells 13a, 13b of an arbitrary type (such as NiMH, Li-type or NiCd), said cells being connected in series so as to provide a sufficient level of an external supply voltage for driving the electronic components 14. A difference compared to FIG 1 is that the battery unit 12 is now provided with three contacts: a negative contact, a first positive contact and a second positive contact. The first positive contact is protected by a first fuse means 20 and is arranged to be connected to a first (positive) terminal 24 of the mobile telephone 11, while the second positive contact is protected by a second fuse means 21 and is arranged to be connected to a second (positive) terminal 26 of the mobile telephone. Finally, the negative contact is arranged to be connected to a third (negative or ground) terminal 40 of the mobile telephone 11.

The battery unit 12 is arranged to receive charging current from the charging device via the terminal 24. In addition, the battery unit is arranged to supply charging current to the mobile telephone 11 through the terminal 26. The following advantages are obtained thanks to the inventive arrangement of terminals and fuse means described above.
- If the charging device 16 no longer operates normally but instead supplies an excessively strong charging current, or is subject to a short circuit, only the first fuse means 20 will release. This will abort the charging, but the second fuse means 21 will still be operative, wherein the power supply of the mobile telephone will not be affected.
- The need for an additional fuse 19a in the charging device 16 or an additional fuse 19b in the mobile telephone 11 (see FIG 1) is eliminated, thereby providing an advantage from an economical point of view.
- The arrangement above allows the two fuse means to be realized as an integrated safety device 10, which will be closer described below with reference to FIG 4.

In FIG 4 a preferred embodiment of the safety device 10 according to the invention is shown. A thin layer of an active material 36 is deposited on a metallic contact tab 30, which is arranged to be connected in series with the battery cells 13a-b by means of soldering, laser or spot welding, etc. The active material 36 is a polymeric material, comprising thin fibres of carbon or another conductive material, said fibres normally conducting electric current but will separate in space and interrupt the current path, once the magnitude of the current increases as a result of an electric fault (cf. the description above with reference to FIG 2). Hence, the material 36 is active in that the status thereof as a conductor of electric current is dependent on a physical property - in this case the current magnitude indirectly via the temperature of the material. The active material is known per se in the technical field, and hence a thorough disclosure will not be necessary here.

Two contacts 32 and 34, respectively, are arranged upon the layer of active material 36. Preferably, these are made from metal and are provided with a smooth upper surface suitable for engagement with the corresponding terminals 24 and 26 in the mobile telephone 11. In the drawing the terminals 24 and 26 are formed as spring contacts, which are arranged to be resiliently pressed against a respective contact 32 and 34 in the safety device 10.

By providing the safety device 10 with double safety functions on the same substrate according to the preferred embodiment the problems described above are solved in an efficient way with respect to cost as well as space. Since the safety device is automatically resetable, the battery unit requires no maintenance in this respect.

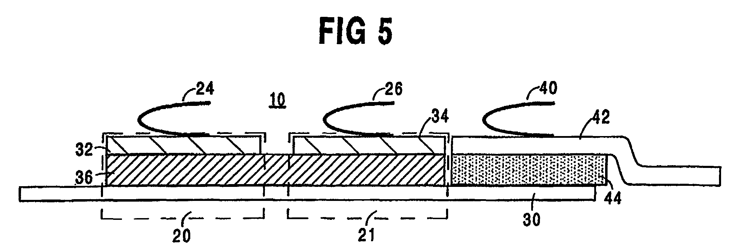

Fig 5 illustrates an improvement of the embodiment shown in FIG 4. Components which are identical in FIG 4 and FIG 5 have been given identical reference numerals in both figures. The safety device 10 according to FIG 5 has been provided with an additional contact means 42, which is arranged on an electrically isolating layer 44. The layer 44 is arranged on the contact tab 30, and so is the layer 36 of active material. The contact means 42 has a smooth upper surface for the reception of a third resilient terminal 40 in the mobile telephone 11. The contact means 42 is arranged to be soldered, welded or in any other way connected to the negative side of the battery cells 13a-b, while the contact tab 30 as before is arranged to be connected to the positive side of the battery cells.

In an alternative embodiment within the scope of the invention may for instance, instead of the active polymeric material, an arrangement with bimetallic elements be used. Furthermore, the safety device does not necessarily have to be automatically resetable, although such a feature is regarded to be appropriate. Finally it is noticed once again, that the invention may be used together with electric equipment other than mobile telephones.

## Claims

1. A portable electric apparatus (11) and a battery unit (12) comprising:
electric circuitry (14) of the apparatus (11), one or more than one battery cells (13a, b) of the battery unit (12) for supplying power to the electric circuitry,
a safety device (10) comprising a first fuse means (20), and a second fuse means (21), and
a first terminal (24) of the apparatus (11) for connecting the apparatus to a charging device (16), **characterized in that**
a first end of the first fuse means (20), a first end of the second fuse means (21) and the one or more than one battery cells (13a, b) are connected to a common node,
a second end of the first fuse means is connected to the first terminal (24), and
a second end of the second fuse means is connected to the electric circuitry (14).

2. An apparatus and battery unit according to claim 1, **characterized in that** the second end of the second fuse means (21) is connected to the electric circuitry (14) via a second terminal (26).

3. An apparatus and battery unit according to claim 1 or 2, **characterized in that** the fuse means (20, 21) are physically integrated.

4. An apparatus and battery unit according to claim 3, **characterized in that** the fuse means (20, 21) are formed as a layer (36) of a material, which is active with respect to at least one physical property, said layer being arranged between a contact tab (30) and a first and a second contact (32, 34), respectively, wherein the contact tab (30) is connected to the one or more than one battery cells (13a, b),
wherein the first contact (32) is connected to the first terminal (24),
wherein the second contact (34) is connected to the second terminal (26).

5. An apparatus and battery unit according to claim 4, **characterized in that** the electric conductivity of the active material layer (36) in a direction between the contact tab (30) and the first and the second contacts (32, 34), respectively, is substantially reduced to zero, when the temperature of the material exceeds a predetermined upper threshold value, and returns, when the temperature of the material sinks below a predetermined lower threshold value.

6. An apparatus and battery unit according to claim 4 or 5, **characterized in that** the first and the second contact (32, 34) have plane upper surfaces for receiving a respective terminal (24, 26) of the electric apparatus (11).

7. An apparatus and battery unit according to claim 6, **characterized by** third contact (42), which is mounted on the contact tab (30) via an intermediate layer (44) of an electrically isolating material, which has a plane upper surface for receiving a third terminal (40) of the electric apparatus (11), and which is arranged to be connected to a negative side of the battery cells (13a-b) of the battery unit (12), while the contact tab (30) is arranged to be connected to a positive side of the battery cells.

8. An apparatus and battery unit according to any preceding claim, **characterized in that** the electric apparatus (11) is a mobile telephone for a cellular mobile telephone system.

9. A rechargeable battery unit (12) comprising:
one or more than one battery cells (13a, b) for supplying power to a portable electric apparatus,
a first contact (32) for connecting the battery unit to a charging device (16),
a safety device comprising a first fuse means (20), whereby a second end of the first fuse means is connected to the first contact, **characterized by**
a second contact (34) for connecting the battery unit to the electric apparatus,
the safety device (10) comprising a second fuse means (21), wherein a first end of the first fuse means, a first end of the second fuse means and the one or more than one battery cells (13a, b) are connected to a common node, and
a second end of the second fuse means is connected to the second contact (34).

10. A battery unit according to claim 9, **characterized in that** the fuse means (20, 21) are physically integrated.

11. A battery unit according to claim 9 or 10, **characterized in that** the fuse means (20, 21) are formed as a layer (36) of a material, which is active with respect to at least one physical property, said layer being arranged between a contact tab (30) and the first and the second contact (32, 34), respectively,
wherein the contact tab (30) is connected to the one or more than one battery cells (13a, b).

12. A battery unit according to claim 11, **characterized in that** the electric conductivity of the active material layer (36) in a direction between the contact tab (30) and the first and the second contact (32, 34), respectively, is substantially reduced to zero, when the temperature of the material exceeds a predetermined upper threshold value, and returns, when the temperature of the material sinks below a predetermined lower threshold value.

13. A battery unit according to claim 11 or 12, **characterized in that** the first and the second contact plates (32, 34) have plane upper surfaces for receiving a respective terminal (24, 26) of the electric apparatus (11).

14. A battery unit according to claim 13, **characterized by** a third contact (42), which is mounted on the contact tab (30) via an intermediate layer (44) of an electrically isolating material, which has a plane upper surface for receiving a third terminal (40) of the electric apparatus (11), and which is connected to a negative side of the battery cells (13a-b) of the battery unit (12), while the contact tab (30) is connected to a positive side of the battery cells.

## Patentansprüche

1. Tragbare elektrische Vorrichtung (11) und Batterieeinheit (12) umfassend:
elektrische Schaltkreistechnik (14) der Vorrichtung (11),
eine oder mehr als eine Batteriezellen (13a, b) der Batterieeinheit (12) zum Zuführen von Energie an die elektrische Schaltkreistechnik,
eine Sicherheitsvorrichtung (10) umfassend ein erstes Sicherungsmittel (20) und ein zweites Sicherungsmittel (21), und
einen ersten Anschluss (24) der Vorrichtung (11) zum Verbinden der Vorrichtung mit einer Ladevorrichtung (16), **gekennzeichnet dadurch, dass**
ein erstes Ende des ersten Sicherungsmittels (20), ein erstes Ende des zweiten Sicherungsmittels (21) und die eine oder mehr als eine Batteriezellen (13a, b) mit einem gemeinsamen Knoten verbunden sind,
ein zweites Ende des ersten Sicherungsmittels mit dem ersten Anschluss (24) verbunden ist, und
ein zweites Ende des zweiten Sicherungsmittels mit der elektrischen Schaltkreistechnik (14) verbunden ist.

2. Vorrichtung und Batterieeinheit nach Anspruch 1, **gekennzeichnet dadurch, dass** das zweite Ende des zweiten Sicherungsmittels (21) mit der elektrischen Schaltkreistechnik (14) über einen zweiten Anschluss (26) verbunden ist.

3. Vorrichtung und Batterieeinheit nach Anspruch 1 oder 2, **gekennzeichnet dadurch, dass** die Sicherungsmittel (20, 21) physikalisch integriert sind.

4. Vorrichtung und Batterieeinheit nach Anspruch 3, **gekennzeichnet dadurch, dass** die Sicherungsmittel (20, 21) als eine Schicht (36) aus einem Material gebildet sind, das in Bezug auf mindestens eine physikalische Eigenschaft aktiv ist, wobei die Schicht zwischen einem Kontaktstreifen (30) und einem ersten bzw. einem zweiten Kontakt (32, 34) angeordnet ist,
wobei der Kontaktstreifen (30) mit der einen oder mehr als einer Batteriezellen (13a, b) verbunden ist,
wobei der erste Kontakt (32) mit dem ersten Anschluss (24) verbunden ist,
wobei der zweite Kontakt (34) mit dem zweiten Anschluss (26) verbunden ist.

5. Vorrichtung und Batterieeinheit nach Anspruch 4, **gekennzeichnet dadurch, dass** die elektrische Leitfähigkeit der aktiven Materialschicht (36) in einer Richtung zwischen dem Kontaktstreifen (30) und den ersten bzw. den zweiten Kontakten (32, 34) im wesentlichen auf null reduziert ist, wenn die Temperatur des Materials einen vorbestimmten oberen Schwellwert überschreitet und zurückkehrt, wenn die Temperatur des Materials unter einen vorbestimmten unteren Schwellwert sinkt.

6. Vorrichtung und Batterieeinheit nach Anspruch 4 oder 5, **gekennzeichnet dadurch, dass** der erste und der zweite Kontakt (32, 34) flache obere Flächen zum Empfangen eines jeweiligen Anschlusses (24, 26) der elektrischen Vorrichtung (11) haben.

7. Vorrichtung und Batterieeinheit nach Anspruch 6, **gekennzeichnet durch** einen dritten Kontakt (42), der an dem Kontaktstreifen (30) über eine Zwischenschicht (44) aus einem elektrisch isolierenden Material befestigt ist, der eine flache obere Fläche zum Empfangen eines dritten Anschlusses (40) der elektrischen Vorrichtung (11) hat und der angeordnet ist, mit einer negativen Seite der Batteriezellen (13a-b) der Batterieeinheit (12) verbunden zu sein, während der Kontaktstreifen (30) angeordnet ist, mit einer positiven Seite der Batteriezellen verbunden zu sein.

8. Vorrichtung und Batterieeinheit nach einem beliebigen vorangehenden Anspruch, **gekennzeichnet dadurch, dass** die elektrische Vorrichtung (11) ein Mobiltelefon für ein zellulares Mobiltelefonsystem ist.

9. Wiederaufladbare Batterieeinheit (12) umfassend:
eine oder mehr als eine Batteriezellen (13a,b) zum Zuführen von Energie an eine tragbare elektrische Vorrichtung,
einen ersten Kontakt (32) zum Verbinden der Batterieeinheit mit einer Ladevorrichtung (16),
eine Sicherheitsvorrichtung umfassend ein erstes Sicherungsmittel (20), wodurch ein zweites Ende des ersten Sicherungsmittels mit dem ersten Kontakt verbunden ist, **gekennzeichnet durch**
einen zweiten Kontakt (34) zum Verbinden der Batterieeinheit mit der elektrischen Vorrichtung,
wobei die Sicherheitsvorrichtung (10) umfasst
ein zweites Sicherungsmittel (21), wobei ein erstes Ende des ersten Sicherungsmittels, ein erstes Ende des zweiten Sicherungsmittels und die eine oder mehr als eine Batteriezellen (13a, b) mit einem gemeinsamen Knoten verbunden sind, und
ein zweites Ende des zweiten Sicherungsmittels mit dem zweiten Kontakt (34) verbunden ist.

10. Batterieeinheit nach Anspruch 9, **gekennzeichnet dadurch, dass** die Sicherungsmittel (20, 21) physikalisch integriert sind.

11. Batterieeinheit nach Anspruch 9 oder 10, **gekennzeichnet dadurch, dass** die Sicherungsmittel (20, 21) als eine Schicht (36) aus einem Material gebildet sind, das in Bezug auf mindestens eine physikalische Eigenschaft aktiv ist, wobei die Schicht zwischen einem Kontaktstreifen (30) und dem ersten bzw. dem zweiten Kontakt (32, 34) angeordnet ist,
wobei der Kontaktstreifen (30) mit der einen oder mehr als einer Batteriezellen (13a, b) verbunden ist.

12. Batterieeinheit nach Anspruch 11, **gekennzeichnet dadurch, dass** die elektrische Leitfähigkeit der aktiven Materialschicht (36) in einer Richtung zwischen dem Kontaktstreifen (30) und dem ersten bzw. dem zweiten Kontakt (32, 34) im wesentlichen auf null reduziert ist, wenn die Temperatur des Materials einen vorbestimmten oberen Schwellwert überschreitet, und zurückkehrt, wenn die Temperatur des Materials unter einen vorbestimmten unteren Schwellwert sinkt.

13. Batterieeinheit nach Anspruch 11 oder 12, **gekennzeichnet dadurch, dass** die ersten und die zweiten Kontaktplatten (32, 34) flache obere Flächen zum Empfangen eines jeweiligen Anschlusses (24, 26) der elektrischen Vorrichtung (11) haben.

14. Batterieeinheit nach Anspruch 13, **gekennzeichnet durch** einen dritten Kontakt (42), der an dem Kontaktstreifen (30) über eine Zwischenschicht (44) aus einem elektrisch isolierenden Material befestigt ist, der eine flache obere Fläche zum Empfangen eines dritten Anschlusses (40) der elektrischen Vorrichtung (11) hat und der mit einer negativen Seite der Batteriezellen (13a-b) der Batterieeinheit (12) verbunden ist, während der Kontaktstreifen (30) mit einer positiven Seite der Batteriezellen verbunden ist.

## Revendications

1. Dispositif électrique portable (11) et unité de batterie (12), comprenant :
des circuits électriques (14) du dispositif (11),
une ou plus d'une cellule de batterie (13a, b) de l'unité de batterie (12) pour délivrer une alimentation aux circuits électriques,
un dispositif de sécurité (10) comprenant un premier moyen formant fusible (20) et un deuxième moyen formant fusible (21), et
une première borne (24) du dispositif (11) pour connecter le dispositif à un dispositif de charge (16), **caractérisés en ce que** :
une première extrémité du premier moyen formant fusible (20), une première extrémité du deuxième moyen formant fusible (21) et les cellules de batterie au nombre d'une ou davantage (13a, b) sont connectées à un noeud commun,
une deuxième extrémité du premier moyen formant fusible est connectée à la première borne (24), et
une deuxième extrémité du deuxième moyen formant fusible est connectée aux circuits électriques (14).

2. Dispositif et unité de batterie selon la revendication 1, **caractérisés en ce que** la deuxième extrémité du deuxième moyen formant fusible (21) est connectée aux circuits électriques (14) par l'intermédiaire d'une deuxième borne (26).

3. Dispositif et unité de batterie selon la revendication 1 ou 2, **caractérisés en ce que** les moyens formant fusible (20, 21) sont physiquement intégrés.

4. Dispositif et unité de batterie selon la revendication 3, **caractérisés en ce que** les moyens formant fusible (20, 21) sont formés sous la forme d'une couche (36) d'un matériau, qui est actif vis-à-vis d'au moins une propriété physique, ladite couche étant disposée entre une patte de contact (30) et un premier et un deuxième contacts (32, 34), respectivement,
dans lesquels la patte de contact (30) est connectée aux cellules de batterie au nombre d'une ou davantage (13a, b),
dans lesquels le premier contact (32) est connecté à la première borne (24),
dans lesquels le deuxième contact (34) est connecté à la deuxième borne (26).

5. Dispositif et unité de batterie selon la revendication 4, **caractérisés en ce que** la conductivité électrique de la couche de matériau actif (36) dans une direction entre la patte de contact (30) et le premier et le deuxième contacts (32, 34), respectivement, est sensiblement réduite à zéro, lorsque la température du matériau dépasse une valeur de seuil supérieure prédéterminée, et se rétablit, lorsque la température du matériau descend en dessous d'une valeur de seuil inférieure prédéterminée.

6. Dispositif et unité de batterie selon la revendication 4 ou 5, **caractérisés en ce que** le premier et le deuxième contacts (32, 34) ont des surfaces supérieures planes pour recevoir une borne respective (24, 26) du dispositif électrique (11).

7. Dispositif et unité de batterie selon la revendication 6, **caractérisés par** un troisième contact (42) qui est monté sur la patte de contact (30) par l'intermédiaire d'une couche intermédiaire (44) d'un matériau électriquement isolant, qui comporte une surface plane pour recevoir une troisième borne (40) du dispositif électrique (11), et qui est agencé de façon à être connecté à un côté négatif des cellules de batterie (13a à b) de l'unité de batterie (12), tandis que la patte de contact (30) est agencée de façon à être connectée à un côté positif des cellules de batterie.

8. Dispositif et unité de batterie selon l'une quelconque des revendications précédentes, **caractérisés en ce que** le dispositif électrique (11) est un téléphone mobile pour un système de téléphone mobile cellulaire.

9. Unité de batterie rechargeable (12) comprenant :
une ou plus d'une cellules de batterie (13a, b) pour délivrer une alimentation à un dispositif électrique portable,
un premier contact (32) pour connecter l'unité de batterie à un dispositif de charge (16), un dispositif de sécurité comprenant un premier moyen formant fusible (20), grâce à quoi une deuxième extrémité du premier moyen formant fusible est connectée au premier contact, **caractérisé par** :
un deuxième contact (34) pour connecter l'unité de batterie au dispositif électrique,
le fait que le dispositif de sécurité (10) comprend un deuxième moyen formant fusible (21), une première extrémité du premier moyen formant fusible, une première extrémité du deuxième moyen formant fusible et les cellules de batterie au nombre d'une ou davantage (13a, b) étant connectées à un noeud commun,
le fait qu'une deuxième extrémité du deuxième moyen formant fusible est connectée au deuxième contact (34).

10. Unité de batterie selon la revendication 9, **caractérisée en ce que** les moyens formant fusible (20, 21) sont physiquement intégrés.

11. Unité de batterie selon la revendication 9 ou 10, **caractérisée en ce que** les moyens formant fusible (20, 21) sont formés sous la forme d'une couche (36) d'un matériau, qui est actif vis-à-vis d'au moins une propriété physique, ladite couche étant disposée entre une patte de contact (30) et le premier et le deuxième contacts (32, 34), respectivement,
dans laquelle la patte de contact (30) est connectée aux cellules de batterie au nombre d'une ou davantage (13a, b).

12. Unité de batterie selon la revendication 11, **caractérisée en ce que** la conductivité électrique de la couche de matériau actif (36) dans une direction entre la patte de contact (30) et le premier et le deuxième contacts (32, 34), respectivement, est sensiblement réduite à zéro, lorsque la température du matériau dépasse une valeur de seuil supérieure prédéterminée, et se rétablit, lorsque la température du matériau descend en dessous d'une valeur de seuil inférieure prédéterminée.

13. Unité de batterie selon la revendication 11 ou 12, **caractérisée en ce que** la première et la deuxième plaques de contact (32, 34) ont des surfaces supérieures planes pour recevoir une borne respective (24, 26) du dispositif électrique (11).

14. Unité de batterie selon la revendication 13, **caractérisée par** un troisième contact (42), qui est monté sur la patte de contact (30) par l'intermédiaire d'une couche intermédiaire (44) d'un matériau électriquement isolant, qui a une surface supérieure plane pour recevoir une troisième borne (40) du dispositif électrique (11), et qui est connecté à un côté négatif des cellules de batterie (13a à b) de l'unité de batterie (12), tandis que la patte de contact (30) est connectée à un côté positif des cellules de batterie.
